# EUROPEAN PATENT SPECIFICATION

(11) **EP 2 977 230 B1**
(45) Date of publication and mention of the grant of the patent: **03.05.2017**
(21) Application number: 14768083.9
(22) Date of filing: 05.03.2014
(51) Int. Cl.: B60C 11/11, B60C 11/04, B60C 11/13

(54) **TIRE**
REIFEN
PNEUMATIQUE

(30) Priority: 18.03.2013 JP 2013055380; 30.04.2013 JP 2013095913
(43) Date of publication of application: 27.01.2016
(73) Proprietor: Bridgestone Corporation, Tokyo 104-8340 (JP)
(72) Inventor: KOBAYASHI, Fumitaka, Kodaira-shi Tokyo 187-8531 (JP)
(74) Representative: Oxley, Robin John George
(86) International application number: PCT/JP2014/055642
(87) International publication number: WO 2014/148260

(56) References cited:
- WO-A1-00/50252
- JP-A- H03 246 104
- JP-A- 2009 023 601
- JP-A- 2012 116 410
- JP-A- 2012 201 253
- US-A1- 2005 241 738

## Description

### Technical Field

The present invention relates to a tire provided with a land formed on a tread portion.

### Background Art

In a tire provided with a land, motion performance on a dry road surface is improved by increasing a ground contact area of the land. Moreover, by suppressing local shear deformation of tread rubber generated at an end portion of the land, slippery between the road surface and the tread rubber is reduced, and the motion performance of the tire is improved. In addition to them, by removing water between a ground contact surface of the land and the road surface, an actual ground contact area of the land is increased, and the motion performance of the tire on a wet road surface is improved.

In order to efficiently remove the water on the ground contact surface, in addition to drainage by a groove on the tread portion, the water needs to be reliably drained to the groove from the ground contact surface of the land. In relation to drainage performance of the land, a tire having a planar table portion and a peripheral portion surrounding the table portion on a block of the land has been known (see Patent Literature 1).

In the prior-art tire described in Patent Literature 1, since water is drained to all directions from the table portion, the drainage performance of the land is improved. However, there is a concern that local deformation of the tread rubber is generated on a boundary portion between the table portion and the peripheral portion, and the boundary portion is pressed onto the road surface. In this case, since a ground contact pressure of the boundary portion rises, there is a concern that it becomes difficult for the water on the table portion to be drained to the peripheral portion and the drainage performance of the land is affected. Moreover, there is also a concern that the actual ground contact area of the land is changed, which affects the motion performance of the tire. Therefore, regarding the prior-art tire, there is a room for improvement from the viewpoint of further improvement of the motion performance of the tire on the dry road surface and the wet road surface. In addition, in this prior-art tire, since deformation and a burden involved in a ground contact concentrate on the table portion of the block, there is a concern that ground contact performance of the block is affected. There is also a concern that concentration of the local deformation of the rubber on the boundary portion between the table portion and the peripheral portion affects the ground contact performance and the drainage performance of the block.

Attention is drawn to the disclosure of JP 2012-116410.

### Citation List

### Patent Literature

PTL 1: Japanese Patent Laid-Open No. 2004-58810

### Summary of Invention

### Technical Problem

The present invention was made in view of the aforementioned prior-art problems and its object is to improve motion performance of a tire provided with a land on a dry road surface and to improve motion performance of the tire on a wet road surface by improving drainage performance of the land. Solution to Problem

The present invention is a tire according to claim 1.

### Advantageous Effects of Invention

According to the present invention, the motion performance of the tire provided with the land on the dry road surface can be improved, and also the motion performance of the tire on the wet road surface can be improved by improving the drainage performance of the land.

### Brief Description of Drawings

Fig. 1 is a plan view illustrating a tread pattern of a tire of a first embodiment.
Fig. 2 is a sectional view of a land in a tire width direction.
Figs. 3A and 3B are views illustrating a land of a prior-art product.
Fig. 4 is a sectional view illustrating a land of a comparative product.
Fig. 5 is a sectional view illustrating the land of the comparative product.
Fig. 6 is a sectional view illustrating the land of the comparative product.
Fig. 7 is a plan view illustrating a tread pattern of a tire of a second embodiment.
Fig. 8 is a perspective view of one block.
Fig. 9 is a front view illustrating a block of a center land of the comparative product.
Fig. 10 is a front view illustrating the block of the center land of the comparative product.
Fig. 11 is a front view illustrating the block of the center land of the comparative product.

### Description of Embodiments

An embodiment of a tire of the present invention will be described with reference to the attached drawings.

A tire of this embodiment is a pneumatic tire for a vehicle (for a passenger car, for example) and is formed in a known structure by general tire constituent members. That is, the tire includes a pair of bead portions, a tread portion, and a pair of side wall portions located between the bead portions and the tread portion. Moreover, the tire includes a pair of bead cores, a carcass arranged between the pair of bead cores, a belt arranged on an outer circumferential side of the carcass, and tread rubber having a predetermined tread pattern.

### (First embodiment)

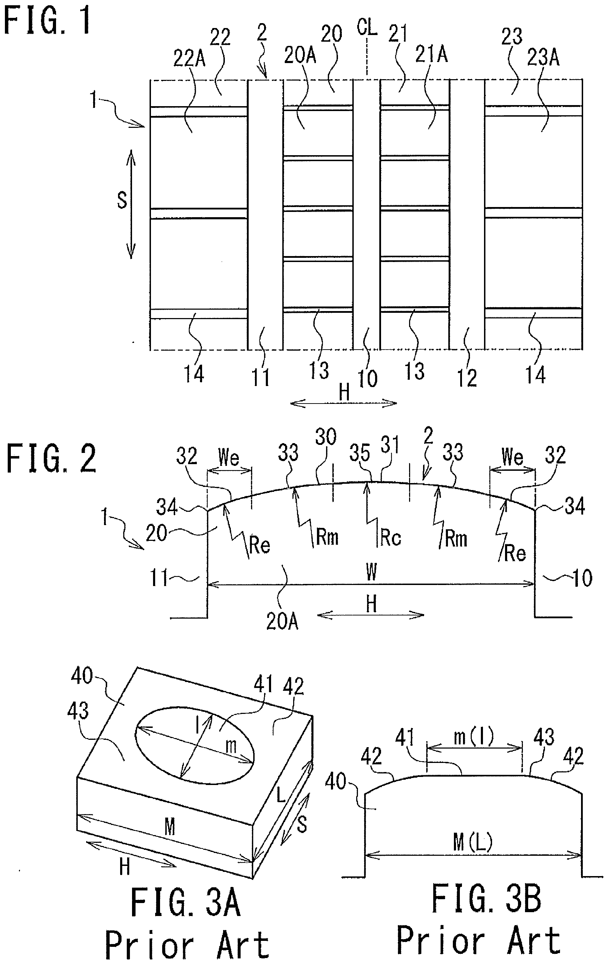

Fig. 1 is a plan view illustrating a tread pattern of a tire 1 of the first embodiment and schematically illustrates a part of a tread portion 2 in a tire circumferential direction S.

As illustrated, the tread portion 2 of the tire 1 is formed symmetrical with respect to a center line CL in a tire width direction H. Moreover, the tire 1 includes a plurality of circumferential grooves 10 to 12, a plurality of lands 20 to 23, and a plurality of width direction grooves 13 and 14, formed on the tread portion 2. The plurality of (three in Fig. 1) circumferential grooves 10 to 12 is main grooves extending in the tire circumferential direction S and is composed of the center circumferential groove 10 located on the center line CL and two outer circumferential grooves 11 and 12 located on outer sides of the center circumferential groove 10 in the tire width direction H.

The tread portion 2 is divided by the plurality of circumferential grooves 10 to 12 in the tire width direction H, and the plurality of (four in Fig. 1) lands 20 to 23 is formed along the tire circumferential direction S. The lands 20 to 23 are ribs (continuous lands) continuously extending in the tire circumferential direction S or block rows (intermittent lands) composed of a plurality of blocks arranged side by side in the tire circumferential direction S. Here, the lands 20 to 23 are block rows having a plurality of blocks 20A to 23A and are composed of the two center lands 20 and 21 and the two shoulder lands 22 and 23. The tire 1 includes the plurality of blocks 20A to 23A on the tread portion 2 and the lands 20 to 23.

The center lands 20 and 21 each have a plurality of width direction grooves 13 and are formed on both sides of the center line CL of the tread portion 2. The shoulder lands 22 and 23 each have a plurality of width direction grooves 14 and are formed on outer sides (shoulder portion sides) of the center lands 20 and 21 in the tire width direction H. The width direction grooves 13 and 14 are lateral grooves extending in the tire width direction H and are formed along the tire width direction H in the lands 20 to 23 and cross the lands 20 to 23 in the tire width direction H. The lands 20 to 23 are divided in the tire circumferential direction S by the plurality of width direction grooves 13 and 14, and the plurality of blocks 20A to 23A is formed in the lands 20 to 23. The blocks 20A to 23A are formed in the lands 20 to 23 by the circumferential grooves 10 to 12 and the width direction grooves 13 and 14. Moreover, the blocks 20A to 23A are divided by the circumferential grooves 10 to 12 and the width direction grooves 13 and 14 and formed each in a square shape (a rectangular shape in Fig. 1) on a plan view in the lands 20 to 23.

The plurality of lands 20 to 23 and the plurality of blocks 20A to 23A are formed on a ground contact surface of the tread portion 2. Moreover, the ground contact surfaces of the lands 20 to 23 are formed each in a convex shape at least on a section of each of the lands 20 to 23 in the tire width direction H. Here, the ground contact surfaces of the lands 20 to 23 are ground contact surfaces of the plurality of blocks 20A to 23A, respectively. On the sections of the lands 20 to 23 (blocks 20A to 23A) in the tire width direction H, each of the entire ground contact surfaces of the lands 20 to 23 is formed in the convex shape raised toward outside in a tire radial direction. As a result, each of the ground contact surfaces of the lands 20 to 23 forms a convex curved surface. In the following, one land 20 (center land) is taken as an example, and the ground contact surface of the land 20 will be described in detail.

Fig. 2 is a sectional view of the land 20 in the tire width direction H.

As illustrated, a ground contact surface 30 of the land 20 (block 20A) is formed in a convex shape in which a plurality of curved portions (curved surface portions) 31 to 33 is smoothly connected on the section of the land 20 in the tire width direction H. That is, the ground contact surface 30 is smoothly curved on boundaries (indicated by dotted lines in Fig. 2) of the plurality of curved portions 31 to 33, and the entire ground contact surface 30 is formed into a curved surface (convex surface) which is smoothly curved. The plurality of curved portions 31 to 33 has predetermined curvatures Rc, Re, and Rm and is formed in an arc shape, respectively. As described above, the ground contact surface 30 is composed of two or more (five in Fig. 2) curved portions 31 to 33, and the curvature of the ground contact surface 30 changes between both end portions 34 of the ground contact surface 30 in the tire width direction H. Moreover, the convex shape of the ground contact surface 30 is made of a convex curve in which the plurality of curved portions 31 to 33 is smoothly connected on the section of the land 20 in the tire width direction H.

The plurality of curved portions 31 to 33 is composed of the center curved portion 31 including a center part 35 of the ground contact surface 30 (land 20) in the tire width direction H, the end curved portion 32 including the end portion 34 of the ground contact surface 30 in the tire width direction H, and the intermediate curved portion 33 located between the center curved portion 31 and the end curved portion 32. It is assumed that the curvature of the center curved portion 31 is Rc, the curvature of the end curved portion 32 is Re, and the curvature of the intermediate curved portion 33 is Rm. In this case, Rc and Re satisfy a relationship of (Rc < Re), and Re is larger than Rc. Moreover, the curvature Rm of the intermediate curved portion 33 is within the range of Rc to Re, and the curvatures Rc, Re, and Rm of the plurality of curved portions 31 to 33 become gradually larger from the center curved portion 31 toward the end curved portion 32.

The center curved portion 31 is formed in a center region of the land 20 in the tire width direction H, and the curvature Rc is a curvature of the ground contact surface 30 in the center region. The end curved portion 32 is formed in an end region of the land 20 in the tire width direction H, and the curvature Re is a curvature of the ground contact surface 30 in the end region. The intermediate curved portion 33 is formed in an intermediate region of the land 20 located between the center region and the end region, and the curvature Rm is a curvature of the ground contact surface 30 in the intermediate region. The center part 35 of the ground contact surface 30 is a top part of the ground contact surface 30 protruding the most toward outside in the tire radial direction.

As described above, in the tire 1 of the first embodiment, the ground contact surface 30 is formed in a convex shape in which the plurality of curved portions 31 to 33 is smoothly connected, and the curvatures Rc, Re, and Rm gradually increase from the center curved portion 31 toward the end curved portion 32. As a result, a ground contact pressure of the land 20 becomes high on the center part 35 side of the ground contact surface 30 and gradually lowers toward the end portion 34 of the ground contact surface 30. Accordingly, local deformation of the tread rubber in the end portion 34 is suppressed, and slippery between the road surface and the tread rubber is reduced. In addition, since the ground contact area of the land 20 can be also sufficiently secured, the motion performance of the tire 1 on the dry road surface can be improved.

On the wet road surface, the water on the ground contact surface 30 can be efficiently drained by the convex-shaped ground contact surface 30 to the periphery of the land 20. Moreover, since the plurality of curved portions 31 to 33 is smoothly connected, the local deformation of the tread rubber in the ground contact surface 30 and the rise of the ground contact pressure can be prevented. As a result, the water can be smoothly drained from the ground contact surface 30 to the periphery of the land 20, and the water between the ground contact surface 30 and the road surface can be reliably removed. The actual ground contact area of the land 20 on the wet road surface can be also increased. Therefore, the drainage performance of the land 20 can be improved, and the motion performance of the tire 1 on the wet road surface can be improved.

The curvature Rc of the center curved portion 31 is within a range of 2.5 to 5 (1/m), and the curvature Re of the end curved portion 32 is preferably within a range of 50 to 200 (1/m). Moreover, a ratio of Re to Rc (Re/Rc) is within a range of 15 to 60 and preferably within a range of 20 to 45. When a width of the land 20 in the tire width direction H is W and a width of the end curved portion 32 in the tire width direction H is We, a ratio of We to W (We/W) is preferably within a range of 0.05 to 0.2. By setting the values as above, Rc, Re, Re/Rc, and We/W can be optimized, respectively.

Here, if the ground contact surface 30 and side walls of the land 20 are smoothly connected by curves, there is a concern that ground contact with an end portion of the land 20 is not made and the ground contact area of the land 20 decreases. On the other hand, in this tire 1, the ground contact surface 30 and the side walls of the land 20 are not smoothly connected, but a corner portion (edge portion) is formed on the end portion of the land 20 by the ground contact surface 30 and the side wall. As a result, since the ground contact is made to the end portion of the land 20, the ground contact area of the land 20 can be reliably secured.

By forming the ground contact surfaces of one or more lands 20 to 23 into the convex-shaped ground contact surface 30, the aforementioned effects can be obtained. Therefore, the ground contact surfaces of all the lands 20 to 23 may be formed into the convex-shaped ground contact surface 30, or the ground contact surfaces of one or more lands 20 to 23 may be formed into the convex-shaped ground contact surface 30. Moreover, when each of the blocks 20A to 23A of the lands 20 to 23 is formed in the convex shape, the ground contact surface 30 may be formed in the convex shape only on the section of each of the blocks 20A to 23A in the tire width direction H. The ground contact surface 30 may be formed in the convex shape on the sections in all the directions passing through centers of the blocks 20A to 23A.

If the lands 20 to 23 are ribs, the ground contact surface 30 is formed in the convex shape only on the section in the tire width direction H. In the ground contact surface 30 of the shoulder lands 22 and 23, the present invention may be applied only to inner side portions in the tire width direction H. Two or more curved portions may be provided between the center curved portion 31 and the end curved portion 32 of the ground contact surface 30.

The present invention is described above by using a pneumatic tire as an example, but the present invention may be also applied to a tire in which a gas other than the air is filled or any other tires. Moreover, a sipe or a groove other than the aforementioned groove may be formed in the tread portion 2.

### (Tire test relating to tire 1 in first embodiment)

In order to check the effects of the tire 1 of the first embodiment, a tire in an example corresponding to the tire 1 (referred to as an embodied product A), a tire of one prior-art example (referred to as a prior-art product), and three tires of comparative examples (referred to as comparative products 1 to 3) were produced and their performances were evaluated.

Each tire is a tire for passenger car and was produced under the following conditions:
size: 195/65R15 (JATMA YEAR BOOK (2012, Japan Automobile Tire Manufacturers Association Standard))
Circumferential groove: Three (see Fig. 1), width: 10 mm, depth: 7 mm
Arrangement of circumferential grooves: One center circumferential groove 10 on the center line CL in the tire width direction H, and two outer circumferential grooves 11 and 12 on the outer sides of the center lands 20 and 21 (width: 25 mm) in the tire width direction H
Width direction grooves 13 of center lands 20 and 21: Width in tire circumferential direction S: 1 mm, depth: 7 mm, 140 grooves at intervals in the tire circumferential direction S
Width direction grooves 14 of the shoulder lands 22 and 23: Width in the tire circumferential direction S: 4 mm, depth: 7 mm, 70 grooves at intervals in the tire circumferential direction S
Each tire was formed so that only the ground contact surfaces of the two center lands 20 and 21 are different.

Figs. 3A and 3B are views illustrating a land (block) 40 of the prior-art product and show one block. Moreover, Fig. 3A is a perspective view of the land 40, and Fig. 3B is a sectional view of the land 40.

As illustrated, the land 40 of the prior-art product has a planar table portion 41 and a periphery portion 42 surrounding the table portion 41. The periphery portion 42 is made of a curved surface formed between the table portion 41 and the end portion of the land 40. A ground contact surface 43 of the land 40 is formed in a convex shape in which the table portion 41 part has a planar shape. When a width of the table portion 41 in the tire width direction H is m and a width of the land 40 in the tire width direction H is M, a ratio of m to M (m/M) is 0.5. When a width of the table portion 41 in the tire circumferential direction S is 1 and a width of the land 40 in the tire circumferential direction S is L, a ratio of 1 to L (1/L) is 0.5.

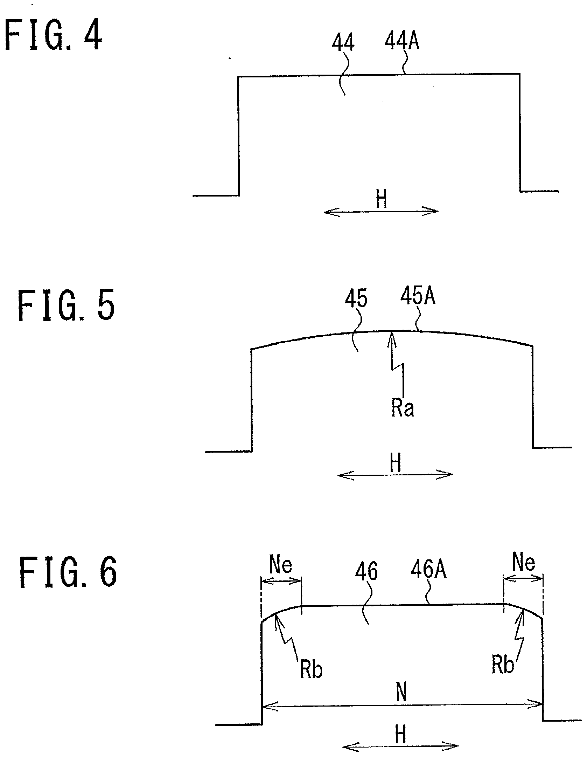

Figs. 4 to 6 are sectional views illustrating lands 44, 45, and 46 of the comparative products 1 to 3 and illustrate sections in the tire width direction H.

In the comparative product 1, as illustrated in Fig. 4, a ground contact surface 44A of the land 44 is formed in a planar shape.

In the comparative product 2, as illustrated in Fig. 5, a ground contact surface 45A of the land 45 is formed having a single curvature Ra. The curvature Ra is 3.3 (1/m).

In the comparative product 3, as illustrated in Fig. 6, a ground contact surface 46A of the land 46 is formed in a planar shape. However, only a part of an end portion side of the ground contact surface 46A is formed having a curvature Rb. The curvature Rb is 100 (1/m). A width Ne of the Rb portion in the tire width direction H is 2 mm, which is 8% of a width N of the land 46 in the tire width direction H.

In the embodied product A (see Fig. 2), the curvature Rc of the center curved portion 31 is 3.3 (1/m), and the curvature Re of the end curved portion 32 is 100 (1/m). The ratio of We to W (We/W) is 0.08, and We is 8% of W. We is 2 mm.

In the test, each tire was assembled to a rim (6J15), and an internal pressure was adjusted to 180 kPa. Moreover, a vehicle to which each tire is attached was made to run on a test course, and a driving stability performance on a dry road surface (dry driving stability performance) and the driving stability performance on a wet road surface (wet driving stability performance) (water depth: 1 mm) were evaluated by sensory evaluation by a driver. By means of running on the wet road surface (water depth: 10 mm), a speed at which hydroplaning occurs (hydroplaning occurring speed) was also actually measured and quantitatively evaluated.

**[Table 1]**

| | Prior-art product | Comparative product 1 | Comparative product 2 | Comparative product 3 | Embodied product A |
|---|---|---|---|---|---|
| Dry driving stability performance | 100 | 90 | 95 | 110 | 105 |
| Wet driving stability performance | 100 | 95 | 105 | 98 | 110 |
| Hydroplaning occurring speed | 100 | 95 | 110 | 98 | 120 |

Evaluation results are shown in Table 1.

The evaluation results are indicated by indexes based on the prior-art product at 100 and show that the larger the numeral value is, the higher the performance is. Moreover, the higher the dry driving stability performance is, the higher the motion performance (dry performance) of the tire on the dry road surface is. The higher the wet driving stability performance is and the larger the numeral value of the hydroplaning occurring speed is, the higher the motion performance (wet performance) of the tire on the wet road surface is. Regarding the hydroplaning occurring speed, the speed increases as the numeral value increases, and the larger the numeral value becomes, the less easily the hydroplaning occurs.

Each performance of the prior-art product was higher than that of the comparative product 1, and based on the comparative product 1, the wet performance of the prior-art product was more largely improved than the dry performance.

In the comparative product 2, since local deformation of the tread rubber in the ground contact surface 45A can be suppressed, the wet performance became higher than that of the prior-art product. In the prior-art product, since the local deformation of the tread rubber on the end portion of the land 40 can be more suppressed, the dry performance was higher than that of the comparative product 2.

In the comparative product 3, though the dry performance was higher than that of the prior-art product, the wet performance was lower than that of the prior-art product. That is because the local deformation of the tread rubber occurs in the ground contact surface 46A.

In the embodied product A, factors for improving each performance are combined, and the factors for lowering each performance are offset, and the dry performance and the wet performance were both improved.

**[Table 2]**

| | Reference product 1-1 | Embodied product 1-2 | Embodied product 1-3 | Embodied product A | Embodied product 1-4 | Embodied product 1-5 | Reference product 1-6 |
|---|---|---|---|---|---|---|---|
| Rc (1/m) | 2.0 | 2.5 | 3.0 | 3.3 | 4.5 | 5.0 | 5.5 |
| Re (1/m) | 100 | 100 | 100 | 100 | 100 | 100 | 100 |
| Re/Rc | 50 | 40 | 33 | 30 | 22 | 20 | 18 |
| We/W (x 100) (%) | 8 | 8 | 8 | 8 | 8 | 8 | 8 |
| Dry driving stability performance | 102 | 104 | 105 | 105 | 104 | 103 | 101 |
| wet driving stability performance | 101 | 105 | 109 | 110 | 108 | 106 | 103 |
| Hydroplaning occurring speed | 101 | 110 | 118 | 120 | 115 | 108 | 103 |

Table 2 illustrates evaluation results when the curvature Rc of the center curved portion 31 was changed. In Table 2, in addition to the evaluation results of the aforementioned embodied product A, the evaluation results of two reference products 1-1 and 1-6 and four embodied products 1-2 to 1-5 with different Rcs are shown. In Table 2 (the same applies to the following Table 3 and Table 4), the ratio of We to W (We/W) is shown in % multiplying We/W 100 times. Reference products 1-1 and 1-6 are not according to the present invention.

As illustrated in Table 2, when the curvature Rc of the center curved portion 31 is within the range of 2.5 to 5 (1/m), the dry performance and the wet performance become higher and are reliably improved. The performance of the embodied product A is the highest, and it was known that the conditions for the embodied product A were optimal.

**[Table 3]**

| | Reference product 2-1 | Embodied product 2-2 | Embodied product 2-3 | Embodied product A | Embodied product 2-4 | Reference product 2-5 | Reference product 2-6 |
|---|---|---|---|---|---|---|---|
| Rc (1/m) | 3.3 | 3.3 | 3.3 | 3.3 | 3.3 | 3.3 | 3.3 |
| Re (1/m) | 25 | 50 | 75 | 100 | 150 | 200 | 225 |
| Re/Rc | 7.5 | 15 | 23 | 30 | 45 | 61 | 68 |
| We/W (x 100) (%) | 8 | 8 | 8 | 8 | 8 | 8 | 8 |
| Dry driving stability performance | 102 | 103 | 105 | 105 | 104 | 102 | 101 |
| wet driving stability performance | 101 | 102 | 105 | 110 | 109 | 106 | 102 |
| Hydroplaning occurring speed | 103 | 108 | 116 | 120 | 118 | 110 | 105 |

Table 3 illustrates evaluation results when the curvature Re of the end curved portion 32 was changed. In Table 3, in addition to the evaluation results of the aforementioned embodied product A, the evaluation results of three reference products 2-1, 2-5 and 2-6 and three embodied products 2-2 to 2-4 with different Res are shown. Reference products 2-1, 2-5 and 2-6 are not according to the present invention.

As illustrated in Table 3, when the curvature Re of the end curved portion 32 is within the range of 50 to 200 (1/m), the dry performance and the wet performance become higher and are reliably improved. The performance of the embodied product A is the highest, and it was known that the conditions for the embodied product A were optimal.

**[Table 4]**

| | Embodied product 3-1 | Embodied product 3-2 | Embodied product 3-3 | Embodied product A | Embodied product 3-4 | Embodied product 3-5 | Embodied product 3-6 |
|---|---|---|---|---|---|---|---|
| Rc (1/m) | 3.3 | 3.3 | 3.3 | 3.3 | 3.3 | 3.3 | 3.3 |
| Re (1/m) | 100 | 100 | 100 | 100 | 100 | 100 | 100 |
| Re/Rc | 30 | 30 | 30 | 30 | 30 | 30 | 30 |
| We/W (× 100) (%) | 2.5 | 5 | 7 | 8 | 15 | 20 | 25 |
| Dry driving stability performance | 102 | 104 | 105 | 105 | 105 | 101 | 100 |
| Wet driving stability performance | 104 | 108 | 110 | 110 | 107 | 105 | 103 |
| Hydroplaning occurring speed | 102 | 108 | 115 | 120 | 117 | 112 | 107 |

Table 4 illustrates evaluation results when We/W was changed. In Table 4, in addition to the evaluation results of the aforementioned embodied product A, the evaluation results of six embodied products 3-1 to 3-6 with different (We/w) s are shown.

As illustrated in Table 4, when We is 5 to 20% of W, that is, when We/W is within the range of 0.05 to 0.2, the dry performance and the wet performance become higher and are reliably improved. The performance of the embodied product A is the highest, and it was known that the conditions for the embodied product A were optimal.

### (Second embodiment)

Subsequently, a tire of a second embodiment will be described. The tire of the second embodiment basically includes a constitution similar to that of the tire 1 of the first embodiment and exerts the effects similar to those of the tire 1 of the first embodiment. Regarding the tire of the second embodiment, the same terms as those of the constitution of the tire 1 are used for the constitution corresponding to the constitution of the tire 1 of the first embodiment.

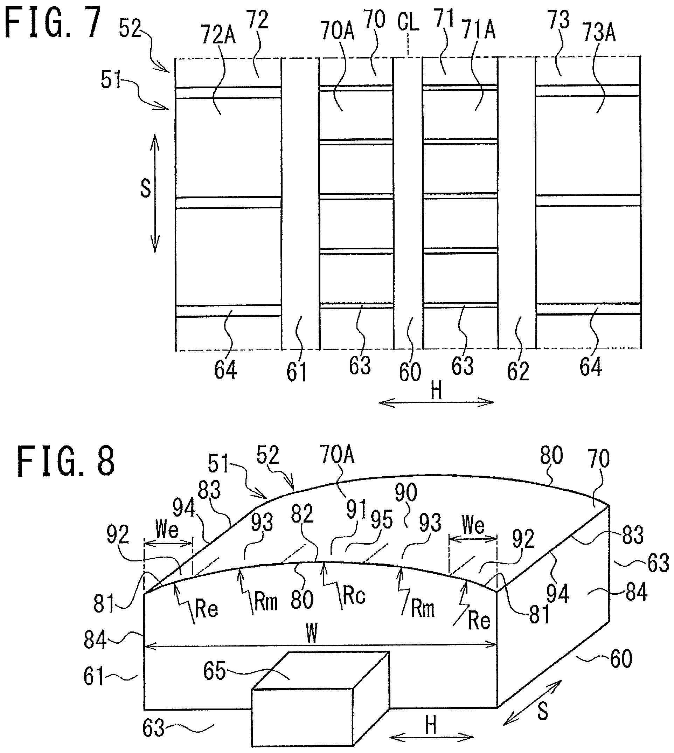

Fig. 7 is a plan view illustrating a tread pattern of a tire 51 of the second embodiment and schematically illustrates a part of a tread portion 52 in the tire circumferential direction S.

As illustrated, the tread portion 52 of the tire 51 is formed symmetrical with respect to the center line CL in the tire width direction H. Moreover, the tire 51 includes a plurality of circumferential grooves 60 to 62, a plurality of width direction grooves 63 and 64, a plurality of lands 70 to 73, and a plurality of blocks 70A to 73A formed on the lands 70 to 73, on the tread portion 52.

The plurality of (three in Fig. 7) circumferential grooves 60 to 62 is main grooves extending in the tire circumferential direction S and includes a center circumferential groove 60 located on the center line CL and two outer circumferential grooves 61 and 62 located on the outer sides of the center circumferential groove 60 in the tire width direction H. The tread portion 52 is divided in the tire width direction H by the plurality of circumferential grooves 60 to 62, and the plurality of (four in Fig. 7) lands 70 to 73 is formed along the tire circumferential direction S. The lands 70 to 73 are block rows (intermittent lands) composed of the plurality of blocks 70A to 73A arranged side by side in the tire circumferential direction S and have the plurality of blocks 70A to 73A, respectively. Moreover, the lands 70 to 73 are composed of the two center lands 70 and 71 and the two shoulder lands 72 and 73.

The center lands 70 and 71 have the plurality of width direction grooves 63 and are formed on both sides of the center line CL of the tread portion 52. The shoulder lands 72 and 73 have the plurality of width direction grooves 64 and are formed on outer sides (shoulder portion sides) of the center lands 70 and 71 in the tire width direction H. The width direction grooves 63 and 64 are lateral grooves extending in the tire width direction H and are formed along the tire width direction H in the lands 70 to 73 and cross the lands 70 to 73 in the tire width direction H. The lands 70 to 73 are divided in the tire circumferential direction S by the plurality of width direction grooves 63 and 64, and the plurality of blocks 70A to 73A is formed in the lands 70 to 73. The blocks 70A to 73A are formed in the lands 70 to 73 by the circumferential grooves 60 to 62 and the width direction grooves 63 and 64. Moreover, the blocks 70A to 73A are divided by the circumferential grooves 60 to 62 and the width direction grooves 63 and 64 and formed each in a square shape (a rectangular shape in Fig. 7) on a plan view in the lands 70 to 73.

The plurality of lands 70 to 73 and the plurality of blocks 70A to 73A are formed on a ground contact surface of the tread portion 52. The ground contact surface of the lands 70 to 73 are ground contact surfaces of the plurality of blocks 70A to 73A, respectively, and the ground contact surfaces of the blocks 70A to 73A are formed each in the convex shape on the sections of the blocks 70A to 73A in the tire width direction H. Moreover, the ground contact surfaces of the blocks 70A to 73A are formed each in a flat shape on the sections of the blocks 70A to 73A in the tire circumferential direction S. Here, on the sections of the blocks 70A to 73A in the tire width direction H, the entire ground contact surfaces of the blocks 70A to 73A are formed each in the convex shape raised toward outside in the tire radial direction. As a result, each of the ground contact surfaces of the blocks 70A to 73A forms a convex curved surface.

Each of the blocks 70A to 73A has a pair of width direction edge portions formed by the pair of width direction grooves 63 and 64. In one or the both of the width direction grooves 63 and 64 forming the pair of width direction edge portions, depths of the width direction grooves 63 and 64 (depth in the tire radial direction) are shallower in a center part than in both end portions of the width direction edge portion. In the following, the one block 70A formed at the center land 70 is used as an example, the ground contact surface of the block 70A and the width direction groove 63 will be described in detail.

Fig. 8 is a perspective view of the one block 70A divided by the circumferential grooves 60 and 61 and the width direction groove 63.

As illustrated, a width direction edge portion 80 is an edge portion extending in the tire width direction H of the block 70A and is formed, by the width direction groove 63, on an end portion (both end portions) of the block 70A in the tire circumferential direction S. Moreover, in at least one width direction groove 63 in the width direction grooves 63 forming the width direction edge portion 80 in each block 70A, the depth of the width direction groove 63 is shallower in a center part 82 of the width direction edge portion 80 than in both end portions 81 of the width direction edge portion 80. The end portion 81 of the width direction edge portion 80 is an end portion of the width direction edge portion 80 in the tire width direction H, and the center part 82 of the width direction edge portion 80 is a center part of the width direction edge portion 80 in the tire width direction H.

Here, a protruding portion 65 is formed in the width direction groove 63 and protrudes from a bottom part of the width direction groove 63 toward outside in the tire radial direction. The protruding portion 65 forms a cuboid shape and is located at the center part 82 of the width direction edge portion 80 and is formed integrally with the side walls of the two blocks 70A adjacent in the tire circumferential direction S. In each block 70A, the protruding portion 65 is formed in at least one (at least either one of) width direction grooves 63, and at least one width direction groove 63 is formed so as to be shallower in the center part 82 than in the both end portions 81 of the width direction edge portion 80 by the protruding portion 65. Moreover, the depth of the width direction groove 63 is discontinuously changed by the protruding portion 65, and the depth of the width direction groove 63 in the center part 82 becomes shallower than the depth of the width direction groove 63 in the both end portions 81.

The tire 51 includes a corner portion 83 extending in the tire circumferential direction S on an end portion (both end portions) of the block 70A in the tire width direction H. The corner portion 83 is an obtuse angle edge portion formed by a side wall 84 of the block 70A (wall surfaces of the circumferential grooves 60 and 61) and a ground contact surface 90 of the block 70A and is located between the side wall 84 and the ground contact surface 90 of the block 70A.

The land 70 of the tire 51 includes the plurality of blocks 70A, and the ground contact surface 90 of the block 70A in the land 70 is formed similarly to the ground contact surface 30 of the land 20 (block 20A) of the first embodiment. Specifically, the ground contact surface 90 of the block 70A is formed in a convex shape in which a plurality of curved portions (curved surface portions) 91 to 93 is smoothly connected on the section of the block 70A in the tire width direction H. That is, the ground contact surface 90 is smoothly curved at a boundary (a part of the boundary is indicated by a dotted line in Fig. 8) of the plurality of curved portions 91 to 93, and the entire ground contact surface 90 is formed of a curved surface (convex curved surface) smoothly curved. The plurality of curved portions 91 to 93 has the predetermined curvatures Rc, Re, and Rm and is formed in an arc shape, respectively. As described above, the ground contact surface 90 is composed of two or more (five in Fig. 8) curved portions 91 to 93, and the curvature of the ground contact surface 90 changes between the both end portions 94 of the ground contact surface 90 in the tire width direction H. Moreover, the convex shape of the ground contact surface 90 is formed of a convex curve in which the plurality of curved portions 91 to 93 is smoothly connected on the section of the block 70A in the tire width direction H.

The plurality of curved portions 91 to 93 includes the center curved portion 91 including a center part 95 of the ground contact surface 90 (block 70A) in the tire width direction H, the end curved portion 92 including an end portion 94 of the ground contact surface 90 in the tire width direction H, and the intermediate curved portion 93 located between the center curved portion 91 and the end curved portion 92. It is assumed that a curvature of the center curved portion 91 is Rc, the curvature of the end curved portion 92 is Re, and the curvature of the intermediate curved portion 93 is Rm. In this case, Rc and Re satisfy a relationship (Rc < Re), and Re is larger than Rc. Moreover, the curvature Rm of the intermediate curved portion 93 is within a range of Rc to Re, and the curvatures Rc, Re, and Rm of the plurality of curved portions 91 to 93 gradually increase from the center curved portion 91 toward the end curved portion 92.

The center curved portion 91 is formed in a center region of the block 70A (land 70) in the tire width direction H, and the curvature Rc is a curvature of the ground contact surface 90 in the center region. The end curved portion 92 is formed in an end region of the block 70A in the tire width direction H, and the curvature Re is a curvature of the ground contact surface 90 in the end region. The intermediate curved portion 93 is formed in an intermediate region of the block 70A located between the center region and the end region, and the curvature Rm is a curvature of the ground contact surface 90 in the intermediate region. The center part 95 of the ground contact surface 90 is a top part of the ground contact surface 90 protruding the most toward outside in the tire radial direction.

As described above, in the tire 51 of the second embodiment, the ground contact surface 90 of the block 70A (land 70) is formed similarly to the ground contact surface 30 of the land 20 in the tire 1 of the first embodiment. Thus, the tire 51 exerts the effects similar to the tire 1 of the aforementioned first embodiment. In addition, on the wet road surface, by the convex-shaped ground contact surface 90, the water on the ground contact surface 90 can be efficiently drained to the periphery of the block 70A, and the sufficient drainage performance can be ensured for the block 70A. Moreover, the water between the ground contact surface 90 and the road surface can be smoothly removed, and the actual ground contact area of the block 70A on the wet road surface can be increased. Therefore, the drainage performance of the block 70A can be improved, and the motion performance of the tire 51 on the wet road surface can be improved. By forming the ground contact surface 90 in the convex shape, the local deformation of rubber on the end portion 94 of the ground contact surface 90 is suppressed, and slippery between the road surface and the block 70A is reduced. Moreover, the ground contact area of the block 70A can be sufficiently secured, and concentration of deformation and a burden involved in ground contact on the center part of the block 70A can be suppressed.

In each block 70A, a depth of at least one width direction groove 63 is made shallower in the center part 82 than in the end portion 81 of the width direction edge portion 80. As a result, rigidity to the compression of the center part of the block 70A increases, and deformation of the block 70A is suppressed. When a force in a longitudinal or lateral direction of the tire 51 is applied to the block 70A, the deformation of the block 70A is suppressed, and the ground contact performance and a grip performance of the block 70A are improved. Therefore, the ground contact performance of the block 70A can be improved, and the motion performance of the tire 51 on the dry road surface can be improved. When the convex-shaped ground contact surface 90 of the block 70A in which this width direction groove 63 is provided is grounded, the ground contact pressure at the center part of the block 70A increases, the water on the ground contact surface 90 is smoothly drained, and high drainage performance is reliably ensured.

As described above, in the tire 51 of the second embodiment, the ground contact performance and the drainage performance of the block 70A can be both improved, and the motion performance of the tire 51 on the dry road surface and the wet road surface can be further improved. Moreover, the ground contact pressure of the block 70A becomes high on the center part 95 side of the ground contact surface 90 by the ground contact surface 90 having the convex shape (convex curve), and gradually lowers toward the end portion 94 of the ground contact surface 90. Accordingly, the local deformation of rubber and the rise of the ground contact pressure in the ground contact surface 90 can be prevented, and the ground contact performance of the block 70A can be further improved. Since the water on the ground contact surface 90 can be smoothly drained to the periphery of the block 70A on the wet road surface, the drainage performance of the block 70A can be further improved. The actual ground contact area of the block 70A on the wet road surface can be also increased.

Similarly to the tire 1 of the first embodiment, the curvature Rc of the center curved portion 91 is within a range of 2.5 to 5 (1/m), and the curvature Re of the end curved portion 92 is preferably within a range of 50 to 200 (1/m). A ratio of Re to Rc (Re/Rc) is within a range of 15 to 60. By setting as above, Rc, Re, and Re/Rc can be optimized, the drainage performance of the block 70A is improved, and the sufficient ground contact area can be reliably secured for the block 70A. When a width of the block 70A in the tire width direction H is W and a width of the end curved portion 92 in the tire width direction H is We, a ratio of We to W (We/W) is preferably within a range of 0.05 to 0.2. By setting as above, the We/W can be optimized, the drainage performance of the block 70A can be further improved, and the sufficient ground contact area can be reliably secured for the block 70A.

Here, when the side wall 84 of the block 70A and the ground contact surface 90 are to be connected smoothly by curves, the ground contact is not made to the end portion of the block 70A, and there is a concern that the ground contact area of the block 70A decreases. On the other hand, in this tire 51, the side wall 84 of the block 70A and the ground contact surface 90 are not smoothly connected but the corner portion 83 is formed by the side wall 84 and the ground contact surface 90 on the end portion of the block 70A in the tire width direction H. As a result, since ground contact can be made to the end portion of the block 70A, the ground contact area of the block 70A can be reliably secured.

In each block 70A, by changing the depth of at least one width direction groove 63 so as to be shallower in the center part 82 than in the end portion 81, the aforementioned effects by the width direction groove 63 can be obtained. Therefore, in the pair of width direction grooves 63 dividing each block 70A, the depths of both the width direction grooves 63 may be changed or the depth of either one of the width direction grooves 63 may be changed. If the depths of both the width direction grooves 63 are changed, the aforementioned effects by the width direction groove 63 can be further improved.

By forming the blocks 70A to 73A of the one or more lands 70 to 73 and the width direction grooves 63 and 64 as described above, the aforementioned effects of the tire 51 can be obtained. Therefore, the blocks 70A to 73A of all the lands 70 to 73 and the width direction grooves 63 and 64 may be formed as described above, or the blocks 70A to 73A of one or more lands 70 to 73 and the width direction grooves 63 and 64 may be formed as above. Moreover, a sipe or a groove other than the aforementioned grooves may be formed in the tread portion 52.

### (Tire test relating to tire 51 in second embodiment)

In order to check the effects of the tire 51 of the second embodiment, a tire in an example corresponding to the tire 51 (referred to as an embodied product B), a tire of one prior-art example (referred to as a prior-art product), and three tires of comparative examples (referred to as comparative products 4 to 6) were produced and their performances were evaluated.

Each tire is a tire for passenger car and was produced under the following conditions:
size: 195/65R15 (JATMA YEAR BOOK (2013, Japan Automobile Tire Manufacturers Association Standard))
Circumferential groove: Three (see Fig. 7), width: 9 mm, depth: 7.5 mm

Arrangement of circumferential grooves: One center circumferential groove 60 on the center line CL in the tire width direction H, and two outer circumferential grooves 61 and 62 on the outer sides of the center lands 70 and 71 (width: 25 mm) in the tire width direction H

Width direction grooves 63 of center lands 70 and 71 : Width in tire circumferential direction S: 2 mm, depth: 7.5 mm, 140 grooves at intervals in the tire circumferential direction S

Width direction grooves 64 of the shoulder lands 72 and 73: Width in the tire circumferential direction S: 4 mm, depth: 7.5 mm, 70 grooves at intervals in the tire circumferential direction S

Each tire was formed so that only the blocks of the two center lands 70 and 71 and the width direction grooves 63 are different.

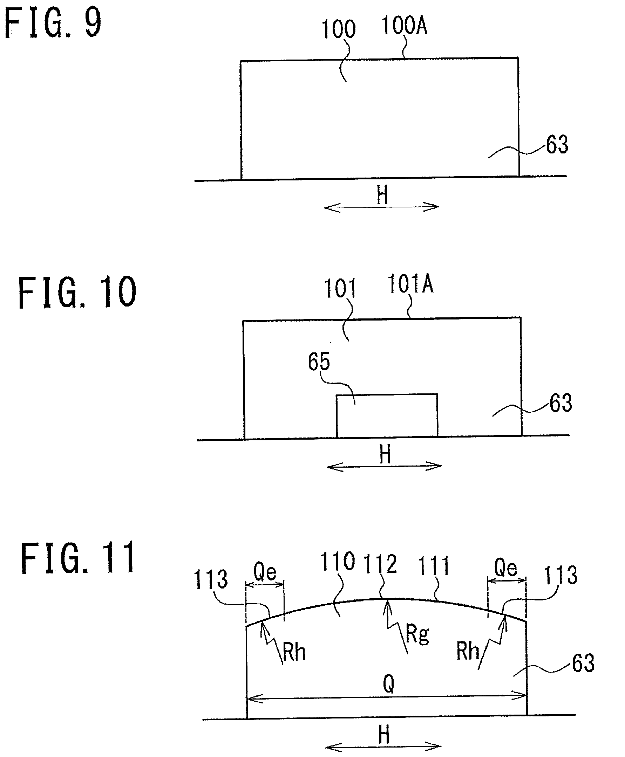

Figs. 9 to 11 are front views illustrating blocks 100, 101, and 110 of the center lands 70 and 71 of the comparative products 4 to 6 and illustrate the blocks 100, 101, and 110 when seen from the tire circumferential direction S.

In the comparative product 4, as illustrated in Fig. 9, a ground contact surface 100A of the block 100 is formed in a planar shape. Moreover, the width direction groove 63 is formed so that the depth does not change.

In the comparative product 5, as illustrated in Fig. 10, a ground contact surface 101A of the block 101 is formed in a planar shape. Moreover, the protruding portion 65 is formed in the width direction groove 63, and the depth of the width direction groove 63 changes similarly to the embodied product B. A height of the protruding portion 65 in the tire radial direction is 3 mm, and a length of the protruding portion 65 in the tire width direction H is 12 mm.

In the comparative product 6, as illustrated in Fig. 11, a ground contact surface 111 of the block 110 is formed in a convex shape in which a plurality of curved portions each having a predetermined curvature is smoothly connected on a section of the block 110 in the tire width direction H. A curvature Rg of a center curved portion 112 including a center part of the ground contact surface 111 is 3.3 (1/m), and a curvature Rh of an end curved portion 113 including an end portion of the ground contact surface 111 is 100 (1/m). A width Qe of the end curved portion 113 in the tire width direction H is 2 mm, which is 8% of a width Q of the block 110 in the tire width direction H. Moreover, there is no protruding portion 65 in the width direction groove 63.

The blocks 70A and 71A of the embodied product B (see Fig. 8) is formed in a shape in which the comparative product 5 and the comparative product 6 are combined. That is, the curvature Rc of the center curved portion 91 is 3. 3 (1/m), and the curvature Re of the end curved portion 92 is 100 (1/m). Moreover, the protruding portion 65 similar to the comparative product 5 is formed in the width direction groove 63. A ratio of We to W (We/W) is 0.08 and We is 8% of W. We is 2 mm. The prior-art product has the same land (block) 40 as the prior-art product (see Fig. 3) described in the first embodiment.

In the test, each tire was assembled to a rim (6J15), and an internal pressure was adjusted to 180 kPa. Moreover, a vehicle to which each tire is attached was made to run on a test course, and a driving stability performance on a dry road surface (dry driving stability performance) and the driving stability performance on a wet road surface (wet driving stability performance) (water depth: 1 mm) were evaluated by sensory evaluation by a driver. By means of running on the wet road surface (water depth: 10 mm), a speed at which hydroplaning occurs (hydroplaning occurring speed) was also actually measured and quantitatively evaluated.

**[Table 5]**

| | Prior-art product | Comparative product 4 | Comparative product 5 | Comparative product 6 | Embodied product 8 |
|---|---|---|---|---|---|
| Dry driving stability performance | 100 | 95 | 110 | 101 | 115 |
| Wet driving stability performance | 100 | 90 | 95 | 105 | 120 |
| Hydroplaning occurring speed | 100 | 90 | 95 | 110 | 120 |

Evaluation results are shown in Table 5. The evaluation results are indicated by indexes based on the prior-art product at 100 and show that the larger the numeral value is, the higher the performance is.

Each performance of the prior-art product was higher than that of the comparative product 4 and based on the comparative product 4, the wet performance of the prior-art product was improved more largely than the dry performance.

In the comparative product 5, rigidity of the block 101 became high, and the ground contact performance of the block 101 was improved and thus, the dry performance thereof was higher than the prior-art product and the comparative product 4. However, in the comparative product 5, since the ground contact pressure at the center part of the block 101 did not become higher than that of the prior-art product and thus, the drainage performance and the wet performance were lower than those of the prior-art product.

In the comparative product 6, since the water on the ground contact surface 111 can be efficiently drained by the convex-shaped ground contact surface 111, the wet performance was higher than that of the prior-art product. However, the dry performance was equal to that of the prior-art product.

In the product B, since the ground contact performance and the drainage performance can be both improved by the convex-shaped ground contact surface 90 and the width direction groove 63, the dry performance and the wet performance were both improved.

**[Table 6]**

| | Reference product 4-1 | Embodied product 4-2 | Embodied product 4-3 | Embodied product **B** | Embodied product 4-4 | Embodied product 4-5 | Reference product 4-6 |
|---|---|---|---|---|---|---|---|
| Rc (1/m) | 2.0 | 2.5 | 3.0 | 3.3 | 4.5 | 5.0 | 5.5 |
| Re (1/m) | 100 | 100 | 100 | 100 | 100 | 100 | 100 |
| Re/Rc | 50 | 40 | 33 | 30 | 22 | 20 | 18 |
| We/W (x 100) (%) | 8 | 8 | 8 | 8 | 8 | 8 | 8 |
| Dry driving stability performance | 106 | 108 | 110 | 115 | 106 | 102 | 101 |
| wet driving stability performance | 101 | 103 | 109 | 120 | 118 | 110 | 108 |
| Hydroplaning occurring speed | 101 | 105 | 115 | 120 | 118 | 110 | 106 |

Table 6 illustrates evaluation results when the curvature Rc of the center curved portion 91 was changed. In Table 6, in addition to the evaluation results of the aforementioned embodied product B, the evaluation results of two reference products 4-1 and 4-6 and four embodied products 4-2 to 4-5 with different Rcs are shown. In Table 6 (the same applies to the following Table 7 and Table 8), the ratio of We to W (We/W) is shown in % multiplying We/W by 100 times. Reference products 4-1 and 4-6 are not according to the present invention.

As illustrated in Table 6, when the curvature Rc of the center curved portion 91 is within the range of 2.5 to 5 (1/m), the dry performance and the wet performance become higher and are reliably improved. The performance of the embodied product B is the highest, and it was known that the conditions for the embodied product B were optimal.

**[Table 7]**

| | Reference product 5-1 | Embodied product 5-2 | Embodied product 5-3 | Embodied product **B** | Embodied product 5-4 | Reference product 5-5 | Reference product 5-6 |
|---|---|---|---|---|---|---|---|
| Rc (1/m) | 3.3 | 3.3 | 3.3 | 3.3 | 3.3 | 3.3 | 3.3 |
| Re (1/m) | 25 | 50 | 75 | 100 | 150 | 200 | 225 |
| Re/Rc | 7.5 | 15 | 23 | 30 | 45 | 61 | 68 |
| We/W (x 100) (%) | 8 | 8 | 8 | 8 | 8 | 8 | 8 |
| Dry driving stability performance | 106 | 108 | 110 | 115 | 108 | 102 | 101 |
| wet driving stability performance | 101 | 102 | 105 | 120 | 115 | 110 | 108 |
| Hydroplaning occurring speed | 103 | 108 | 116 | 120 | 118 | 110 | 105 |

Table 7 illustrates evaluation results when the curvature Re of the end curved portion 92 was changed. In Table 7, in addition to the evaluation results of the aforementioned embodied product B, the evaluation results of three reference products 5-1, 5-5 and 5-6 and three embodied products 5-2 to 5-4 with different Res are shown. Reference products 5-1, 5-5 and 5-6 are not according to the present invention.

As illustrated in Table 7, when the curvature Re of the end curved portion 92 is within the range of 50 to 200 (1/m), the dry performance and the wet performance become higher and are reliably improved. The performance of the embodied product B is the highest, and it was known that the conditions for the embodied product B were optimal. From Table 6 and Table 7, it was also known that the dry performance and the wet performance become higher and are reliably improved if Re/Rc is within a range of 15 to 60.

**[Table 8]**

| | Embodied product 6-1 | Embodied product 6-2 | Embodied product 6-3 | Embodied product B | Embodied product 6-4 | Embodied product 6-5 | Embodied product 6-6 |
|---|---|---|---|---|---|---|---|
| Rc(1/m) | 3.3 | 3.3 | 3.3 | 3.3 | 3.3 | 3.3 | 3.3 |
| Re (1/m) | 100 | 100 | 100 | 100 | 100 | 100 | 100 |
| Re/Rc | 30 | 30 | 30 | 30 | 30 | 30 | 30 |
| We/W(×100) (%) | 2.5 | 5 | 7 | 8 | 15 | 20 | 25 |
| Dry driving stability performance | 106 | 110 | 112 | 115 | 105 | 101 | 100 |
| Wet driving stability performance | 104 | 108 | 110 | 120 | 115 | 110 | 105 |
| Hydroplaning occurring speed | 102 | 108 | 115 | 120 | 117 | 112 | 107 |

Table 8 illustrates evaluation results when We/W was changed. In Table 8, in addition to the evaluation results of the aforementioned embodied product B, the evaluation results of six embodied products 6-1 to 6-6 with different (We/W) s are shown.

As illustrated in Table 8, when We is 5 to 20% of W, that is, when We/W is within the range of 0.05 to 0.2, the dry performance and the wet performance become higher and are reliably improved. The performance of the embodied product B is the highest, and it was known that the conditions for the embodied product B were optimal.

### Reference Signs List

- 1: tire
- 2: tread portion
- 10 to 12: circumferential groove
- 13, 14: width direction groove
- 20 to 23: land
- 20A to 23A: block
- 30: ground contact surface
- 31 to 33: curved portion
- 34: end portion
- 35: center part
- 51: tire
- 52: tread portion
- 60 to 62: circumferential groove
- 63, 64: width direction groove
- 65: protruding portion
- 70 to 73: land
- 70A to 73A: block
- 80: width direction edge portion
- 81: end portion
- 82: center part
- 83: corner portion
- 84: side wall
- 90: ground contact surface
- 91 to 93: curved portion
- 94: end portion
- 95: center part
- CL: center line

## Claims

1. A tire (1, 51) including a land (20, 70) formed on a tread portion (2, 52), wherein
a ground contact surface (30, 90) of the land (20, 70) is formed in a convex shape in which a plurality of curved portions (31 to 33, 91 to 93) each having a predetermined curvature (Rc, Re, Rm) is smoothly connected at least on a section of the land (20, 70) in a tire width direction (H),
Rc < Re holds when a curvature of a center curved portion (31, 91) including a center part (35, 95) of the ground contact surface (30, 90) is Rc and a curvature of an end curved portion (32, 92) including an end portion (34, 94) of the ground contact surface (30, 90) is Re,
a curvature (Rm) of a curved portion (33, 93) located between the center curved portion (31, 91) and the end curved portion (32, 92) is within a range of Rc to Re,
the curvature Rc of the center curved portion (31, 91) is within a range of 2.5 to 5 (1/m), and
Re/Rc is within a range of 15 to 60.

2. The tire (1, 51) according to claim 1, wherein
the curvature Re of the end curved portion (32, 92) is within a range of 50 to 200 (1/m).

3. The tire (1, 51) according to claim 1 or 2, wherein
when a width of the land (20, 70) in the tire width direction (H) is W and a width of the end curved portion (32, 92) in the tire width direction (H) is We, We/W is within a range of 0.05 to 0.2.

4. The tire (51) according to any one of claims 1 to 3, wherein
the land (70) has a plurality of width direction grooves (63) extending in the tire width direction (H) and a plurality of blocks (70A) each having a width direction edge portion extending in the tire width direction (H) formed by the width direction groove (63);
the ground contact surface (90) of the block (70A) of the land (70) is formed in the convex shape on a section of the block (70A) in the tire width direction (H); and
a depth of at least one width direction groove (63) forming the width direction edge portion (80) in each block (70A) is shallower in the center part (82) of the width direction edge portion (80) than in both end portions (81) of the width direction edge portion (80).

5. The tire (51) according to claim 4, wherein
a corner portion (83) formed by a side wall (84) of the block (70A) and the ground contact surface (90) is provided at the end portion of the block (70A) in the tire width direction (H).

6. The tire (51) according to claim 4 or 5, wherein
a protruding portion (65) protruding from a bottom portion of the width direction groove (63) toward outside in a tire radial direction is formed in the width direction groove (63); and
the protruding portion (65) has a cuboid shape and is located at the center part (82) of the width direction edge portion (80) and is formed integrally with the side walls of the two blocks (70A) adjacent in the tire circumferential direction (S).

## Patentansprüche

1. Reifen (1, 51) einschließlich eines Stegs (20, 70), der auf einem Teil der Lauffläche (2, 52) geformt ist, wobei
eine Bodenkontaktfläche (30, 90) des Stegs (20, 70) in einer konvexen Form geformt ist, in der mehrere gekrümmte Abschnitte (31 bis 33, 91 bis 93), jeweils mit einer bestimmten Krümmung (Rc, Re, Rm), nahtlos mit mindestens einem Abschnitt des Stegs (20, 70) in Reifenbreitenrichtung (H) verbunden sind,
Rc < Re gilt, wenn eine Krümmung eines in der Mitte gekrümmten Abschnitts (31, 91) einschließlich eines mittleren Teils (35, 95) der Bodenkontaktfläche (30, 90) Rc ist und eine Krümmung eines am Ende gekrümmten Abschnitts (32, 92) einschließlich eines Endstücks (34, 94) der Bodenkontaktfläche (30, 90) Re ist,
eine Krümmung (Rm) eines gekrümmten Abschnitts (33, 93), der zwischen dem in der Mitte gekrümmten Abschnitt (31, 91) und dem am Ende gekrümmten Abschnitt (32, 92), innerhalb eines Bereichs von Rc bis Re liegt,
die Krümmung Rc des in der Mitte gekrümmten Abschnitts (31, 91) innerhalb eines Bereichs von 2,5 bis 5 (1/m) liegt und
Re/Rc innerhalb eines Bereichs von 15 bis 60 liegt.

2. Reifen (1, 51) nach Anspruch 1, wobei
die Krümmung Re des am Ende gekrümmten Abschnitts (32, 92) innerhalb eines Bereichs von 50 bis 200 (1/m) liegt.

3. Reifen (1, 51) nach Anspruch 1 oder 2, wobei,
wenn eine Breite des Stegs (20, 70) in Reifenbreitenrichtung (H) W ist und eine Breite des am Ende gekrümmten Abschnitts (32, 92) in Reifenbreitenrichtung (H) We ist, We/W in einem Bereich von 0,05 bis 0,2 liegt.

4. Reifen (51) nach einem der Ansprüche 1 bis 3, wobei
der Steg (70) mehrere Breitenrichtungsrillen (63) hat, die in Reifenbreitenrichtung (H) verlaufen, sowie mehrere Blöcke (70A), die jeweils einen Kantenabschnitt in Breitenrichtung haben, der in Reifenbreitenrichtung (H) verläuft und von der Breitenrichtungsrille (63) geformt ist;
die Bodenkontaktfläche (90) des Blocks (70A) des Stegs (70) in konvexer Form auf einem Abschnitt des Blocks (70A) in Reifenbreitenrichtung (H) geformt ist; und
eine Tiefe von mindestens einer Breitenrichtungsrille (63), die den Kantenabschnitt in Breitenrichtung (80) in jedem Block (70A) formt, im mittleren Teil (82) des Kantenabschnitts in Breitenrichtung (80) flacher ist als in beiden Endabschnitten (81) des Kantenabschnitts in Breitenrichtung (80).

5. Reifen (51) nach Anspruch 4, wobei
ein Eckabschnitt (83), der durch eine Seitenwand (84) des Blocks (70A) und die Bodenkontaktfläche (90) geformt wird, am Endabschnitt des Blocks (70A) in der Reifenbreitenrichtung (H) bereitgestellt wird.

6. Reifen (51) nach Anspruch 4 oder 5, wobei
ein hervorstehender Abschnitt (65), der aus einem unteren Abschnitt der Breitenrichtungsrille (63) nach außen in einer Reifenradialrichtung hervorsteht, in der Breitenrichtungsrille (63)geformt ist; und
der hervorstehende Abschnitt (65) eine kubische Form hat und sich im mittleren Teil (82) des Kantenabschnitts in Breitenrichtung (80) befindet und integral mit den Seitenwänden der zwei Blöcke (70A) daneben in Reifenumfangsrichtung (S) geformt ist.

## Revendications

1. Bandage pneumatique (1, 51) englobant une partie d'appui (20, 70) formée sur une partie de bande de roulement (2, 52), dans lequel :
une surface de contact au sol (30, 90) de la partie d'appui (20, 70) est formée en une forme convexe, dans laquelle plusieurs parties courbées (31 à 33, 91 à 93), ayant chacune une courbure prédéterminée (Rc, Re, Rm) sont connectées de manière lisse au moins à une section de la partie d'appui (20, 70), dans une direction de la largeur du bandage pneumatique (H) ;
la relation Rc < Re est satisfaite lorsqu'une courbure d'une partie à courbure centrale (31, 91) englobant une partie centrale (35, 95) de la surface de contact au sol (30, 90) correspond à Rc, une courbure d'une partie à courbure d'extrémité (32, 92) englobant une partie d'extrémité (34, 94) de la surface de contact au sol (30, 90) correspondant à Re ;
une courbure (Rm) d'une partie courbée (33, 93) agencée entre la partie à courbure centrale (31, 91) et la partie à courbure d'extrémité (32, 92) est comprise dans un intervalle allant de Rc à Re ;
la courbure Rc de la partie à courbure centrale (31, 91) est comprise dans un intervalle allant de 2,5 à 5 (1/m) ; et
le rapport Re/Rc est compris dans un intervalle allant de 15 à 60.

2. Bandage pneumatique (1, 51) selon la revendication 1, dans lequel :
la courbure Re de la partie à courbure d'extrémité (32, 92) est comprise dans un intervalle allant de 50 à 200 (1/m).

3. Bandage pneumatique (1, 51) selon les revendications 1 ou 2, dans lequel :
lorsqu'une largeur de la partie d'appui (20, 70), dans la direction de la largeur du bandage pneumatique (H) correspond à W, une largeur de la partie à courbure d'extrémité (32, 92), dans la direction de la largeur du bandage pneumatique (H), correspondant à We, le rapport We/W est compris dans un intervalle allant de 0,5 à 0,2.

4. Bandage pneumatique (51) selon l'une quelconque des revendications 1 à 3, dans lequel :
la partie d'appui (70) comporte plusieurs rainures dans la direction de la largeur (63) s'étendant dans la direction de la largeur du bandage pneumatique (H), et plusieurs pavés (70A), comportant chacun une partie de bordure dans la direction de la largeur, s'étendant dans la direction de la largeur du bandage pneumatique (H) formés par la rainure dans la direction de la largeur (63) ;
la surface de contact au sol (90) du pavé (70A) de la partie d'appui (70) est formée dans la forme convexe sur une section du pavé (70A), dans la direction de la largeur du bandage pneumatique (H) ; et
une profondeur d'au moins une rainure dans la direction de la largeur (63) formant la partie de bordure dans la direction de la largeur (80) dans chaque pavé (70A) est inférieure dans la partie centrale (82) de la partie de bordure dans la direction de la largeur (80) que dans les deux parties d'extrémité (81) de la partie de bordure dans la direction de la largeur (80).

5. Bandage pneumatique (51) selon la revendication 4, dans lequel :
une partie de coin (83) formée par une paroi latérale (84) du pavé (70A) et la surface de contact au sol (90) est agencée au niveau de la partie d'extrémité du pavé (70A) dans la direction de la largeur du bandage pneumatique (H).

6. Bandage pneumatique (51) selon les revendications 4 ou 5, dans lequel :
une partie en saillie (65) débordant d'une partie inférieure de la rainure dans la direction de la largeur (63) vers l'extérieur dans une direction radiale du bandage pneumatique, est formée dans la rainure dans la direction de la largeur (63) ; et
la partie en saillie (65) a une forme cuboïde et est agencée au niveau de la partie centrale (82) de la partie de bordure dans la direction de la largeur (80) et est formée d'une seule pièce avec les parois latérales des deux pavés (70A) adjacentes dans la direction circonférentielle du bandage pneumatique (S).
